(19) Europäisches Patentamt
European Patent Office
Office européen des brevets

(11) **EP 4 521 294 A1**

(12) **EUROPEAN PATENT APPLICATION**
published in accordance with Art. 153(4) EPC

(43) Date of publication:
**12.03.2025 Bulletin 2025/11**

(51) International Patent Classification (IPC):
***G06F 40/284*** (2020.01)

(21) Application number: 23838435.8

(22) Date of filing: **14.03.2023**

(52) Cooperative Patent Classification (CPC):
**G06F 40/242; G06F 40/284; G06N 3/0442; G06N 3/09**

(86) International application number:
**PCT/CN2023/081269**

(87) International publication number:
**WO 2024/011933 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.07.2022 CN 202210813310**

(71) Applicant: **Huawei Cloud Computing Technologies Co., Ltd.**
**Guiyang, Guizhou 550025 (CN)**

(72) Inventors:
• **JIANG, Zhenchao**
  **Guiyang, Guizhou 550025 (CN)**
• **WU, Di**
  **Guiyang, Guizhou 550025 (CN)**
• **SHI, Xiaohui**
  **Guiyang, Guizhou 550025 (CN)**
• **SHAO, Chuanling**
  **Guiyang, Guizhou 550025 (CN)**
• **LI, Changxuan**
  **Guiyang, Guizhou 550025 (CN)**

(74) Representative: **Epping - Hermann - Fischer Patentanwaltsgesellschaft mbH**
**Schloßschmidstraße 5**
**80639 München (DE)**

(54) **COMBINED SENSITIVE-WORD DETECTION METHOD AND APPARATUS, AND CLUSTER**

(57) A combined sensitive term detection method and apparatus, and a cluster are provided to improve accuracy of sensitive term detection. In this application, after obtaining a combined sensitive term expression provided by a user, a detection apparatus parses the combined sensitive term expression provided by the user, to generate a user combined sensitive term entry. The user combined sensitive term entry and a preset candidate combined sensitive term entry are stored in a combined sensitive term library. The detection apparatus detects, based on the combined sensitive term library, a collected to-be-detected text to obtain a first matching result, where the first matching result indicates a hit combined sensitive term entry; and presents the first matching result to the user. The combined sensitive term library includes some combined sensitive term entries, and these combined sensitive term entries further include a preset candidate combined sensitive term entry in addition to the user combined sensitive term entry, so that the first matching result meets a user requirement and also reflects a potential combined sensitive term entry, thereby ensuring accuracy.

FIG. 3

**Description**

**CROSS-REFERENCE TO RELATED APPLICATIONS**

This application claims priority to Chinese Patent Application No. 202210813310.X, filed with the China National Intellectual Property Administration on July 11, 2022 and entitled "COMBINED SENSITIVE TERM DETECTION METHOD, APPARATUS, DEVICE, AND CLUSTER", which is incorporated herein by reference in its entirety.

**TECHNICAL FIELD**

This application relates to the field of communication technologies, and in particular, to a combined sensitive term detection method and apparatus, and a cluster.

**BACKGROUND**

The development of the internet brings great convenience to people's life. People can post information on a network platform through a device such as a mobile terminal or a desktop computer, and can also browse information posted on the network platform through a device such as a mobile terminal or a desktop computer. The development of the internet makes it easier to post and browse information, and also makes information spread more quickly and widely.

With the development of the internet, it is easier to spread sensitive content such as illegal information or uncivilized information through the internet. Therefore, it is necessary to enhance detection of information transmitted on the internet and recognize some sensitive terms in the information transmitted on the internet.

For sensitive term recognition, a user usually needs to configure some sensitive terms, and whether the sensitive terms configured by the user exist in a to-be-detected text is identified. This sensitive term recognition mode relies on the user. If a quantity of the sensitive terms configured by the user is small or some sensitive terms are missing, posting of the sensitive content cannot be completely avoided.

**SUMMARY**

This application provides a combined sensitive term detection method and apparatus, and a cluster, to improve accuracy of sensitive term detection.

According to a first aspect, an embodiment of this application provides a combined sensitive term detection method. The method may be performed by a detection apparatus. In the method, a user may configure a combined sensitive term expression. The combined sensitive term expression includes a logical operator and a plurality of terms. After obtaining the combined sensitive term expression provided by the user, the detection apparatus may parse the combined sensitive term expression provided by the user, to generate a user combined sensitive term entry. The user combined sensitive term entry and a preset candidate combined sensitive term entry may be stored in a combined sensitive term library.

The detection apparatus obtains the combined sensitive term library, detects, based on the combined sensitive term library, a collected to-be-detected text to obtain a first matching result, where the first matching result indicates a hit combined sensitive term entry of the to-be-detected text in the combined sensitive term library; and presents the first matching result to the user. Through the foregoing method, the combined sensitive term library used by the detection apparatus for detecting the to-be-detected text includes some combined sensitive term entries. These combined sensitive term entries further include a preset candidate combined sensitive term entry in addition to the user combined sensitive term entry, so that the obtained first matching result not only meets a detection requirement of the user, but also can detect a potential combined sensitive term entry, thereby ensuring detection accuracy.

In a possible implementation, the candidate combined sensitive term entry in the combined sensitive term library is extracted from a pre-configured training sample by using an artificial intelligence (artificial intelligence, AI) technology.

Through the foregoing method, a large quantity of candidate combined sensitive term entries can be extracted from the training sample by using the AI technology, to ensure that the combined sensitive term library includes abundant combined sensitive term entries, and further ensure accuracy of a finally obtained first matching result.

In a possible implementation, after presenting the first matching result to the user, the detection apparatus may detect a review operation performed by the user on the first matching result, and determine an incorrectly hit combined sensitive term entry annotated by the user; and then filter the combined sensitive term library based on the incorrectly hit combined sensitive term entry, and remove a combined sensitive term entry consistent with the incorrectly hit combined sensitive term entry from the combined sensitive term library.

Through the foregoing method, the detection apparatus can update the combined sensitive term library in time based on the incorrectly hit combined sensitive term entry annotated by the user, to ensure that the detection apparatus can obtain a more accurate matching result when detecting text by using the combined sensitive term library subsequently.

In a possible implementation, in addition to detecting the to-be-detected text by using the combined sensitive term library, the detection apparatus may further detect the to-be-detected text in another manner. For example, the detection apparatus may invoke an AI detection model to detect the to-be-detected text to obtain a second matching result, where the second matching result indicates a hit combined sensitive term entry of the to-be-detected text in the combined sensitive term library. The AI detection model is a pre-trained model configured to detect a combined sensitive term entry existing in a text. The combined sensitive term entry indicated by the first matching result and the combined sensitive term entry indicated by the second matching result may be partially the same, completely the same, or completely different. The detection apparatus may present the second matching result to the user, or may present a summary of the first matching result and the second matching result to the user.

Through the foregoing method, the detection apparatus may detect the to-be-detected text in a plurality of different manners, thereby further ensuring that the matching result finally presented to the user can present more hit combined sensitive term entries.

In a possible implementation, when detecting the collected to-be-detected text based on the combined sensitive term library, the detection apparatus may construct a dictionary tree based on the plurality of combined sensitive term entries in the combined sensitive term library; and then invoke an AC automaton to obtain a candidate term sequence in the to-be-detected text, where the candidate term sequence includes one or more terms in the to-be-detected text. After the dictionary tree is constructed and the candidate term sequence is obtained, the candidate term sequence may be performed matching in the dictionary tree, and a combined sensitive term entry matching a part or all of terms in the candidate term sequence is determined. The combined sensitive term entry matching the part or all of terms in the candidate term sequence is the hit combined sensitive term entry.

Through the foregoing method, the detection apparatus ensures that the hit combined sensitive term entry can be obtained efficiently through the steps of constructing the dictionary tree, invoking the AC automaton, and matching the candidate term sequence by using the dictionary tree.

In a possible implementation, in this embodiment of this application, the combined sensitive term expression is allowed to include one or more logical operators. The logical operators include but are not limited to: AND, OR, NOT, and an operator representing preferential calculation. Through the foregoing method, the combined sensitive term expression is allowed to include a plurality of different logical operators, so that configuration of the combined sensitive term expression is more flexible, and user experience is improved.

According to a second aspect, an embodiment of this application further provides a detection apparatus. The detection apparatus has a function of implementing a behavior in the method embodiment in the first aspect. For beneficial effects, refer to the descriptions in the first aspect. Details are not described herein again. The function may be implemented by hardware, or may be implemented by executing corresponding software by hardware. The hardware or software includes one or more modules corresponding to the foregoing functions. In a possible design, a structure of the detection apparatus includes a manual configuration module, an expression parsing module, an automatic generation module, a text obtaining module, and a matching module. Optionally, the detection apparatus further includes a filtering module, a manual review module, and an intelligent detection module. These modules may perform corresponding functions in the method example in the first aspect. For details, refer to the detailed descriptions in the method example. Details are not described herein again.

According to a third aspect, an embodiment of this application further provides a computing device. The computing device has a function of implementing a behavior of the detection apparatus in the method embodiment in the first aspect. For beneficial effects, refer to the descriptions in the first aspect. Details are not described herein again. A structure of the computing device includes a processor and a memory. The processor is configured to support the detection apparatus in performing a corresponding function in the method in the first aspect. The memory is coupled to the processor, and stores program instructions and data that are necessary for a communication apparatus. A structure of the communication apparatus further includes a communication interface, configured to communicate with another device.

According to a fourth aspect, an embodiment of this application further provides a computing device cluster. The computing device cluster has a function of implementing a behavior of the detection apparatus in the method embodiment in the first aspect. For beneficial effects, refer to the descriptions in the first aspect. Details are not described herein again. The computing device cluster includes at least one computing device. A structure of any computing device includes a processor and a memory. The processor in any computing device is configured to support the detection apparatus in performing some or all functions in the first aspect and the possible implementations of the first aspect. The memory is coupled to the processor, and stores program instructions and data that are necessary for a communication apparatus. A structure of the communication apparatus further includes a communication interface, configured to communicate with another device.

According to a fifth aspect, this application further provides a computer-readable storage medium. The computer-readable storage medium stores instructions. When the instructions are run on a computer, the computer is enabled to perform the method in the first aspect and the possible implementations of the first aspect.

According to a sixth aspect, this application further provides a computer program product including instructions. When the instructions are run on a computer, the computer is enabled to perform the method in the first aspect and the possible implementations of the first aspect. According to a seventh aspect, this application further provides a computer chip. The chip is connected to a memory. The chip is configured to read and execute a software program stored in the memory, to perform the method in the first aspect and the possible implementations of the first aspect.

## BRIEF DESCRIPTION OF DRAWINGS

FIG. 1 is a diagram of an architecture of a system according to this application;
FIG. 2 is a diagram of a structure of a detection apparatus according to this application;
FIG. 3 is a diagram of a combined sensitive term detection method according to this application;
FIG. 4 is a diagram of a combined sensitive term expression configuration interface according to this application;
FIG. 5A is a diagram of a negative instance dictionary tree according to this application;
FIG. 5B is a diagram of a positive instance dictionary tree according to this application;
FIG. 5C is a diagram of a dictionary tree used by an AC automaton according to this application;
FIG. 6 is a diagram of presenting a matching result according to this application;
FIG. 7 is a diagram of an NLP model training method according to this application;
FIG. 8 is a diagram of an AI detection model training method according to this application;
FIG. 9 is a diagram of a structure of a computing device according to this application; and
FIG. 10 is a diagram of a structure of a computing device cluster according to this application.

## DESCRIPTION OF EMBODIMENTS

Before a combined sensitive term detection method and apparatus, and a cluster in this application are described, some concepts in this application are first described.

1. Sensitive term and combined sensitive term.

The sensitive term is a term that has bad meanings and needs to be restricted. A sensitive political, violent, pornographic, drug-related, or gambling-related term may be defined as a sensitive term. An uncivilized term may also be defined as a sensitive term. Types of the sensitive term are not limited to the preceding types. In consideration of complexity of information on a network, some specific person names, place names, and item names may also be defined as sensitive terms. Because diversity of word expressions, it may not be accurately determined, only by using one or more sensitive terms in a sentence or a paragraph, that the sentence or the paragraph involves sensitive content. For example, although the sentence "We should resist drugs firmly" has a sensitive term "drugs", the content conveyed in this sentence does not belong to illegal content. It can be learned that, when a text is detected, if only one or more sensitive terms are recognized to determine whether content of a fragment of the text is sensitive content, an error is easily caused. To avoid such an error, a sensitive term needs to be combined with another term for recognition during text detection. The combination of a sensitive term and another term is referred to as a combined sensitive term.

2. Combined sensitive term expression.

The combined sensitive term expression is an expression including a logical operator and a term. The logical operator includes but is not limited to: AND (&), OR (|), NOT (!), and parentheses (()). The parentheses represent preferential calculation. Optionally, the combined sensitive term expression further includes a category of sensitive content involved in a combined sensitive term in the expression, for example, the category may be porn, drug, gambling, politics, or a customized category. In this embodiment of this application, a symbol ":" is used to separate an expression of a logical operator and a term from a category. The part before the symbol ":" is the expression of the logical operator and the term, and the part after the symbol ":" is the category of the combined sensitive term. This separation manner is merely an example. In actual application, another separation manner may alternatively be used.

For example, a combined sensitive term expression "DE&FG&! 谣言 :政 (DE&FG&! rumor: politics)" indicates that if a text segment includes "DE" and "FG" and does not have " 谣言 (rumor)", the text segment can be hit by the combined sensitive term expression, the text segment includes a combined sensitive term, and a category involved is "政 (politics)".

For another example, a combined sensitive term expression "DE&(ABC|FG): 政 (DE&(ABC|FG): politics)" indicates that if a text segment includes "DE" and "FG" or "ABC", the text segment can be hit by the combined sensitive term expression, the text segment includes a combined sensitive term, and a category involved is "政 (politics)".

In this embodiment of this application, more types of logical operators are allowed to be included in the combined sensitive term expression. A user combines a plurality of logical operators, and the combined sensitive term expression can further support an extended operation such as an exclusive OR operation or an exclusive NOR operation. For example, in a combined sensitive term expression "(A&!B)|(!A&B): c", A and B may be keywords or combined sensitive terms.

In this embodiment of this application, the user is allowed to configure a combined sensitive term expression, so that the user can set a combined sensitive term, and subsequently, a to-be-detected text can be detected based on a requirement of the user.

3. Combined sensitive term entry.

Any combined sensitive term expression may be parsed to obtain one or more corresponding combined sensitive term entries, and the combined sensitive term expression and the corresponding combined sensitive term entries express consistent content. The combined sensitive term entry includes a logical operator AND (&) and terms. Optionally, the combined sensitive term entry further includes a category.

The combined sensitive term expression is set for the convenience of configuring combined sensitive terms by the user. The combined sensitive expression is a user-oriented expression of combined sensitive terms. The combined sensitive term entry is set to facilitate matching of a combined sensitive term inside a detection apparatus, and the combined sensitive term entry is more easily recognized by a matching module in the detection apparatus.

4. Dictionary tree (also referred to as single search tree or Trie tree) and AC automaton (Aho-Corasick automaton).

The AC automaton is a multi-pattern string matching algorithm. The AC automaton is used to find, in a given text segment, phrases that are the same as a plurality of preset phrases, and determine a quantity of times that these phrases appear.

The AC automaton is an extension of the Knuth-Morris-Pratt (Knuth-Morris-Pratt, KMP) algorithm. The KMP algorithm is a single pattern string matching algorithm (that is, applicable to a scenario in which a single pattern string is found in a text string). The AC automaton is a multi-pattern string matching algorithm. The principle of the KMP algorithm is similar to that of the AC automaton.

When the AC automaton is implemented, first, in a similar way as the KMP algorithm, a Trie tree needs to be constructed first. The Trie tree is of a tree structure, and is a variant of a hash tree. The Trie tree includes a plurality of nodes, and each node is used for identifying a character. The Trie tree is referred to as a dictionary tree because the Trie tree has a function similar to that of a dictionary. All characters to be matched are recorded in the Trie tree. When a specific character in a string is searched for, the matching may be performed based on a sequence and hierarchy of the characters in the Trie tree.

After the Trie tree is constructed, a fail (fail) pointer is obtained based on a breadth first search (breadth first search, BF S) algorithm. A function of the fail pointer is to determine a next matching node when a text fails to match a specific node in the Trie tree. In other words, when a text fails to match a node in the current dictionary tree, the matching may be performed on a node to which the fail pointer points. The Trie tree and the fail pointer are used for performing matching. The matching process mainly includes the following two cases:

Case 1: A text matches a current node, indicating that there is a path from the current node to a target character along the dictionary tree. If a character represented by the current matching node is the end of a word, based on the fail pointer of the current node, traversal is performed until a root node is reached.

Case 2: If a text does not match a current character, matching continues to be performed on a node to which a fail pointer of the current node points, and the matching process ends as the pointer points to a root node.

Either of the two cases is performed repeatedly until the end of a pattern string is matched.

In the Trie tree constructed by the AC automaton in this embodiment of this application, a node indicates a term, and the term is a term in a combined sensitive term entry in a combined sensitive term library. The Trie tree is constructed based on all terms involved in the combined sensitive term entry in the combined sensitive term library.

In this embodiment of this application, a detection apparatus 100 can obtain a combined sensitive term expression configured by a user, and the detection apparatus 100 may parse the combined sensitive term expression to obtain a corresponding combined sensitive term entry, and use the corresponding combined sensitive term entry as a combined sensitive term entry in the combined sensitive term library. The combined sensitive term library further includes another preset combined sensitive term entry. After obtaining a to-be-detected text, the detection apparatus 100 performs sensitive term matching on the to-be-detected text based on the combined sensitive term library, obtains a matching result, and feeds back the matching result to the user. **In** this embodiment of this application, the user is allowed to flexibly use a logical operator to define a combined sensitive term, instead of a single sensitive term, and sensitive content in the to-be-detected text can be accurately recognized by recognizing the combined sensitive term. **In** addition, the combined sensitive term library further includes another pre-extracted combined sensitive term entry in addition to the combined sensitive term entry corresponding to the combined sensitive term expression, thereby expanding a quantity of combined sensitive term entries in the combined sensitive term library, and ensuring that an accurate matching result can be obtained subsequently and potential sensitive content of the to-be-detected text can be found.

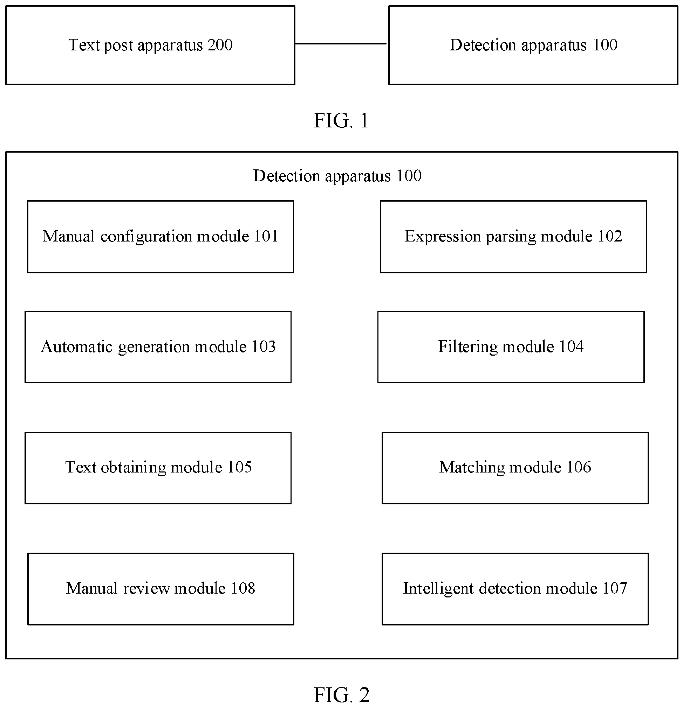

FIG. 1 is a diagram of an architecture of a system according to an embodiment of this application. The system includes a detection apparatus 100 and a text post apparatus 200.

The text post apparatus 200 may post a text under an operation by a user. The detection apparatus 100 can perform the combined sensitive term detection method provided in embodiments of this application, obtain the text posted by the text post apparatus 200, and detect the text, to determine a combined sensitive term existing in the text.

A specific form of the text post apparatus 200 is not limited in this embodiment of this application. The text post apparatus 200 may be software, such as communication software or game software, and is deployed on a computing device. The user posts a text by operating the software on the computing device. The text post apparatus 200 may alternatively be a hardware apparatus, for example, a mobile phone (mobile phone), a tablet computer (pad), a portable computer, a desktop computer, or a server. The user may operate the hardware apparatus to post a text.

A specific form of the detection apparatus 100 is not limited in this embodiment of this application. The detection apparatus 100 may be software having a combined sensitive term detection function. The user may start the software to trigger the combined sensitive term detection function. The detection apparatus 100 may alternatively be a hardware apparatus. The hardware apparatus has a capability of detecting a combined sensitive term, and can establish a connection to the text post apparatus 200 to obtain a text from the text post apparatus 200.

For example, the detection apparatus 100 may be a network firewall, and can perform content reorganization on a page in a network and analyze whether sensitive content exists on the page. For another example, the detection apparatus 100 may be a host firewall disposed on a host, and the detection apparatus 100 can perform content reorganization on a page posted by the host and analyze whether sensitive content exists on the page. For another example, the detection apparatus 100 may be a Web application firewall (Web application firewall, WAF) deployed on an application server, and analyzes content posted by the user through the application server (such as a forum, an application, or a content community), to determine whether the posted content includes sensitive content. For another example, the detection apparatus 100 may also exist in a form of a situational awareness platform, and can collect and analyze traffic of a specified site. For another example, the detection apparatus 100 may be deployed on a cloud and used as a WAF on the cloud. An operation of accessing a cloud server by the user (for example, posting content in the cloud or viewing content in the cloud) needs to be analyzed by the cloud WAF first to determine whether sensitive content exists in the access by the user to the cloud. The cloud WAF transfers an analysis result to the server accessed by the user in the cloud, so that the server determines whether to allow the access by the user. For another example, the detection apparatus 100 exists in a form of a detection service. For example, the detection service may be a detection service provided by the cloud for the outside, in other words, the detection apparatus 100 may be deployed in a cloud data center. The user may request the detection service from the detection apparatus 100, request to monitor a specified server or a specified site, collect data by using a technology such as a crawler or a probe, and analyze the collected data. For another example, the detection service may be a detection service provided for a local area network. The detection apparatus 100 may be deployed in the local area network, monitors a server in the local area network, collects a text by using a technology such as a crawler or a probe, and analyzes collected data.

This system is applicable to a scenario in which sensitive content needs to be detected in a text. The following are four scenarios:

Scenario 1: A cloud management platform monitors and analyzes service content posted by a cloud tenant.

The cloud tenant can lease a resource in the cloud data center and deploy a service on the leased resource. In this scenario, the text post apparatus 200 may be understood as the resource, or may be understood as software run on the resource. The cloud tenant posts, through the text post apparatus 200, service content such as a file or a web page that is related to a service. As a management party, the cloud management platform needs to monitor whether sensitive content exists in the service content posted by the cloud tenant. In this scenario, the cloud management platform may detect, through the detection apparatus 100, whether a combined sensitive term exists in a service memory, to determine whether the sensitive content exists.

Scenario 2: A regulatory party monitors and analyzes internet content.

For example, in some applications such as a social media application, a forum application, a search engine application, a video application, and an audio application, the user may use client software of such applications to post content through the internet. Operators of these applications need to monitor content posted by users, to prevent sensitive content in the content posted by the users. The operators of these applications may monitor, through the detection apparatus 100, the content posted by the users.

Scenario 3: Monitoring and analysis of content posted on the local area network. The local area network is a network that is open only to a specific group or user, for example, a network within an enterprise or a community.

The specific group or user may post information through the local area network, or communicate with a user inside the local area network through the local area network. An establisher or an operation and maintenance personnel of the local area network may monitor, through the detection apparatus 100, information transmitted in the local area network.

Scenario 4: A service provider monitors and analyzes content of a service user.

The detection apparatus 100 may exist in the form of a detection service, that is, the detection apparatus 100 may provide a detection service externally, and a user may request, in a manner of purchase, trial, or the like, the detection apparatus 100 to provide the detection service. The user is the service user, and the detection apparatus 100 is the service provider. After receiving the request from the user, the detection apparatus 100 may monitor and analyze, based on the request from the user, content that the user requests to detect.

As mentioned in the foregoing descriptions, both the detection apparatus 100 and the text post apparatus 200 may be implemented through software or hardware. For example, the following describes a specific implementation of the detection apparatus 100 in detail. Similarly, for an implementation of the text post apparatus 200, refer to the implementation of the detection apparatus 100.

An example in which the detection apparatus 100 is used as a software functional unit is used. The detection apparatus 100 may include code run on a computing instance. The computing instance may be at least one of computing devices such as a physical host (a computing device), a virtual machine, and a container. Further, there may be one or more computing devices. For example, the detection apparatus 100 may include code run on a plurality of hosts/virtual machines/containers. It should be noted that the plurality of hosts/virtual machines/containers configured to run the application may be distributed in a same region (region), or may be distributed in different regions. The plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is provided in one region. A communication gateway needs to be configured in each VPC for communication between two VPCs in the same region or between VPCs in different regions. Interconnection between VPCs is implemented through the communication gateway.

An example in which the detection apparatus 100 is used as a hardware functional unit is used. The detection apparatus 100 may include at least one computing device, such as a server. Alternatively, the detection apparatus 100 may be a device implemented using an application-specific integrated circuit (application-specific integrated circuit, ASIC) or a programmable logic device (programmable logic device, PLD), or the like. The PLD may be a complex programmable logical device (complex programmable logical device, CPLD), a field programmable gate array (field programmable gate array, FPGA), a generic array logic (generic array logic, GAL), or any combination thereof.

A plurality of computing devices included in the detection apparatus 100 may be distributed in a same region, or may be distributed in different regions. The plurality of computing devices included in the detection apparatus 100 may be distributed in a same AZ, or may be distributed in different AZs. Similarly, the plurality of computing devices included in the detection apparatus 100 may be distributed in a same VPC, or may be distributed in a plurality of VPCs. The plurality of computing devices may be any combination of computing devices such as a server, an ASIC, a PLD, a CPLD, an FPGA, and a GAL.

The following describes a structure of the detection apparatus 100. As shown in FIG. 2, the detection apparatus 100 includes a manual configuration module 101, an expression parsing module 102, an automatic generation module 103, a text obtaining module 105, and a matching module 106. Optionally, the detection apparatus 100 further includes a filtering module 104, a manual review module 108, and an intelligent detection module 107.

The manual configuration module 101 may obtain a combined sensitive term expression provided by a user. The manual configuration module 101 can be user-oriented and provides, for a user, an interface for configuring the combined sensitive term expression, and the user configures the combined sensitive term expression based on a requirement of the user. After detecting an operation by the user, the manual configuration module 101 obtains the combined sensitive term expression.

The expression parsing module 102 may obtain the combined sensitive term expression from the manual configuration module 101. After obtaining the combined sensitive term expression, the expression parsing module 102 may parse the combined sensitive term expression to obtain a combined sensitive term entry. For ease of description, the combined sensitive term entry obtained by the expression parsing module 102 is referred to as a user combined sensitive term entry.

The automatic generation module 103 can extract a combined sensitive term entry from a pre-configured training sample. For ease of description, the combined sensitive term entry extracted by the automatic generation module 103 is referred to as a candidate combined sensitive term entry. The candidate combined sensitive term entry extracted by the automatic generation module 103 and the user combined sensitive term entry obtained by the expression parsing module 102 may be stored in a combined sensitive term library. In other words, the expression parsing module 102 and the automatic generation module 103 jointly maintain the combined sensitive term library. The combined sensitive term library includes a plurality of combined sensitive term entries. The combined sensitive term entry in the combined sensitive term library may be the user combined sensitive term entry or the candidate combined sensitive term entry.

If the detection apparatus 100 does not include the filtering module 104, the expression parsing module 102 or the automatic generation module 103 may transmit the combined sensitive term library to the matching module 106, so that the matching module 106 performs combined sensitive term matching on a to-be-detected text.

If the detection apparatus 100 includes the filtering module 104, the expression parsing module 102 or the automatic generation module 103 may transmit the combined sensitive term library to the filtering module 104, and the filtering module 104 filters the combined sensitive term library, filters out an incorrect combined sensitive term entry in the combined sensitive term library, and transmits a filtered combined sensitive term library to the matching module 106, so that the matching module 106 performs combined sensitive term matching on a to-be-detected text.

The text obtaining module 105 is configured to obtain the to-be-detected text, and send the to-be-detected text to the matching module 106. Optionally, if the text obtaining module 105 may further send the to-be-detected text to the intelligent detection module 107.

One or more modules are provided in the detection apparatus 100, and are configured to detect the to-be-detected text, to determine a combined sensitive term entry matching the to-be-detected text. If the detection apparatus 100 includes the plurality of modules configured to detect the to-be-detected text, the plurality of modules may obtain corresponding matching results by using different detection manners. In this embodiment of this application, an example in which the detection apparatus 100 is provided with two modules: a matching module 106 and an intelligent detection module 107 is used for description. In actual application, the detection apparatus 100 may alternatively include only one of the modules. For example, the detection apparatus 100 includes only the matching module 106.

After obtaining the to-be-detected text and the combined sensitive term library, the matching module 106 may detect the to-be-detected text based on the combined sensitive term library, that is, the matching module 106 performs combined sensitive term matching on the to-be-detected text based on the combined sensitive term library to obtain a first matching result. The first matching result includes a combined sensitive term entry matching the to-be-detected text. In other words, the first matching result indicates the combined sensitive term entry found in the to-be-detected text. In this embodiment of this application, that the combined sensitive term entry is found in the to-be-detected text or the combined sensitive term entry matches the to-be-detected text may be referred to as that the combined sensitive term entry is hit in the to-be-detected text. Accordingly, the combined sensitive term entry matching the to-be-detected text may be referred to as a hit combined sensitive term entry.

When the intelligent detection module 107 obtains the to-be-detected text, the intelligent detection module 107 does not need to use the combined sensitive term library, but invokes an artificial intelligence (artificial intelligence, AI) detection model, to detect the to-be-detected text, to obtain a second matching result. Information indicated by the second matching result is similar to that of the first matching result. Because the matching module 106 and the intelligent detection module 107 use different detection manners, a hit combined sensitive term entry indicated by the second matching result and the hit combined sensitive term entry indicated by the first matching result may be partially different, completely the same, or completely different.

If the manual review module 108 is not deployed in the detection apparatus 100, the matching module 106 may present the first matching result to the user, and the intelligent detection module 107 may present the second matching result to the user. Alternatively, the first matching result and the second matching result are summarized by the matching module 106 or the intelligent detection module 107 for feedback to the user.

If the manual review module 108 is deployed in the detection apparatus 100, the matching module 106 may provide the first matching result for the manual review module 108, and the intelligent detection module 107 may provide the second matching result for the manual review module 108. The manual review module 108 may present a matching result to the user (where the matching result may be the first matching result, the second matching result, or a result obtained by summarizing the first matching result and the second matching result, so that the user can perform review). When reviewing the matching result, the user may annotate an incorrectly hit combined sensitive term entry in the matching result, and may further annotate a correctly hit combined sensitive term entry. The manual review module 108 may detect a review operation by the user, and determine, based on the review operation by the user, the incorrectly hit combined sensitive term entry from the matching result. The manual review module 108 feeds back the incorrectly hit combined sensitive term entry to the filtering module 104. A reviewed matching result is fed back. The reviewed matching result includes the incorrectly hit combined sensitive term entry annotated by the user, and optionally, further includes the correctly hit combined sensitive term entry.

The manual configuration module 101, the expression parsing module 102, the automatic generation module 103, the filtering module 104, the text obtaining module 105, the matching module 106, the intelligent detection module 107, and the manual review module 108 may all be implemented through software, or may be implemented through hardware. For example, the following uses the manual configuration module 101 as an example to describe an implementation of the manual configuration module 101. Similarly, for implementations of the expression parsing module 102, the automatic generation module 103, the filtering module 104, the text obtaining module 105, the matching module 106, the intelligent detection module 107, and the manual review module 108, refer to the implementation of the manual configuration module 101.

An example in which a module is used as a software functional unit is used. The manual configuration module 101 may include code run on a computing instance. The computing instance may include at least one of a physical host (a computing device), a virtual machine, and a container. Further, there may be one or more computing instances. For example, the manual configuration module 101 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is provided in one region. A communication gateway needs to be configured in each VPC for communication between two VPCs in the same region or between VPCs in different regions. Interconnection between VPCs is implemented through the communication gateway.

An example in which the module is used as a hardware functional unit is used. The manual configuration module 101 may include at least one computing device, such as a server. Alternatively, the manual configuration module 101 may be a device implemented using an application-specific integrated circuit (application-specific integrated circuit, ASIC) or a programmable logic device (programmable logic device, PLD), or the like. The PLD may be a complex programmable logical device (complex programmable logical device, CPLD), a field programmable gate array (field programmable gate array, FPGA), a generic array logic (generic array logic, GAL), or any combination thereof.

A plurality of computing devices included in the manual configuration module 101 may be distributed in a same region, or may be distributed in different regions. The plurality of computing devices included in the manual configuration module 101 may be distributed in a same AZ, or may be distributed in different AZs. Similarly, the plurality of computing devices included in the manual configuration module 101 may be distributed in a same VPC, or may be distributed in a plurality of VPCs. The plurality of computing devices may be any combination of computing devices such as a server, an ASIC, a PLD, a CPLD, an FPGA, and a GAL.

It should be noted that, in other embodiments, any one of the manual configuration module 101, the expression parsing module 102, the automatic generation module 103, the filtering module 104, the text obtaining module 105, the matching module 106, the intelligent detection module 107, or the manual review module 108 may be configured to perform any step in the combined sensitive term detection method; steps implemented by the manual configuration module 101, the expression parsing module 102, the automatic generation module 103, the filtering module 104, the text obtaining module 105, the matching module 106, the intelligent detection module 107, and the manual review module 108 may be specified as required; and the manual configuration module 101, the expression parsing module 102, the automatic generation module 103, the filtering module 104, the text obtaining module 105, the matching module 106, the intelligent detection module 107, and the manual review module 108 separately implement different steps in the sensitive term detection method to implement all functions of the detection apparatus 100.

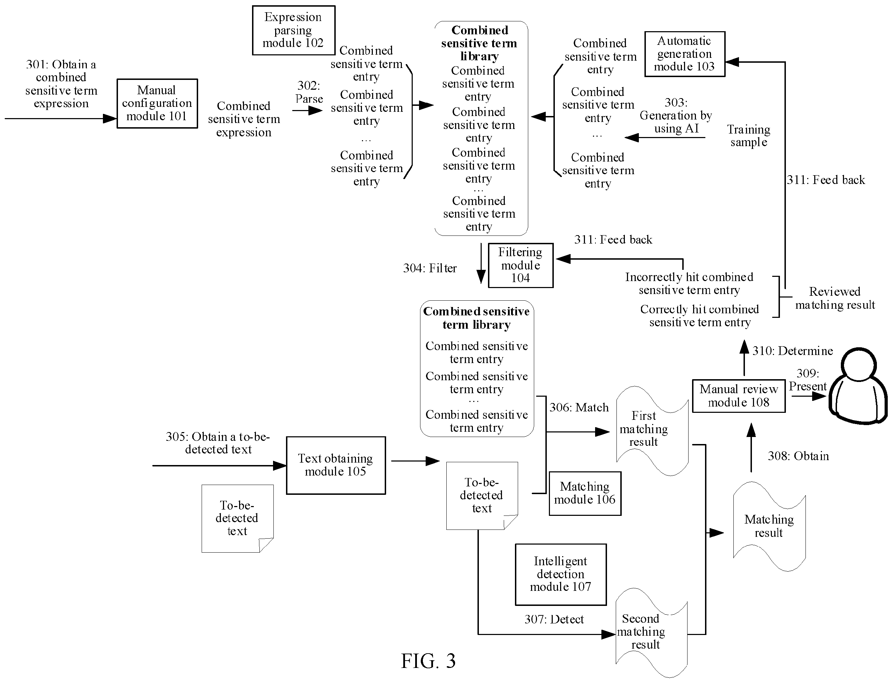

The following describes a combined sensitive term detection method provided in this application with reference to FIG. 3. The method includes two parts. A first part is a process of constructing a combined sensitive term library (step 301 to step 304), and the other part is a process of matching a combined sensitive term (step 305 to step 311), including the following steps.

Step 301: A manual configuration module 101 obtains a combined sensitive term expression provided by a user.

In this embodiment of this application, the manual configuration module 101 provides a configuration interface for the user, and allows the user to configure a combined sensitive term expression through the configuration interface.

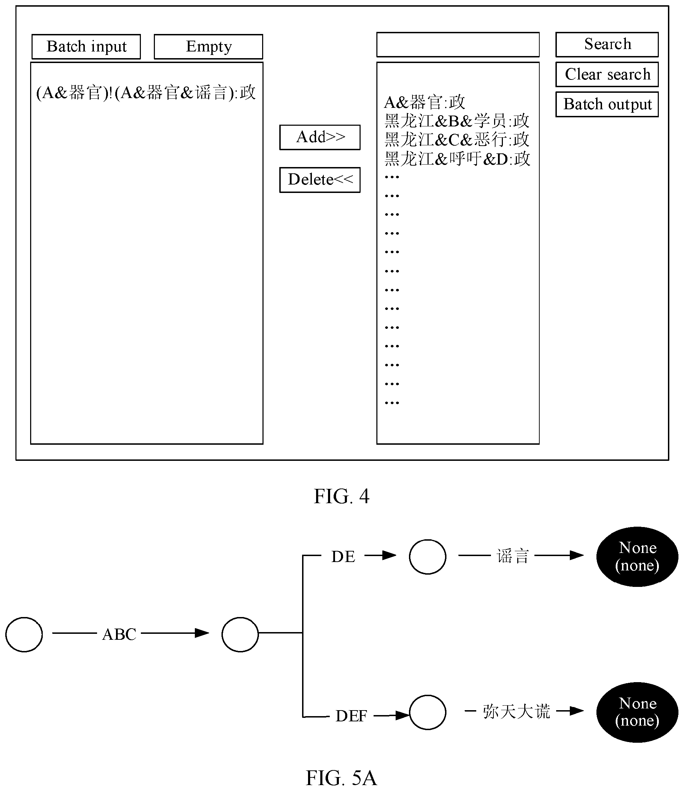

FIG. 4 shows a combined sensitive term expression configuration interface according to an embodiment of this application. The configuration interface may provide a combined sensitive term expression configuration interface for the user. On the combined sensitive term expression configuration interface, the user may configure the combined sensitive term expression based on a requirement of the user. On the configuration interface, functions such as batch import, batch export, search, inserting, deleting, and modification are further provided.

On the configuration interface, the user may input, delete, or modify the combined sensitive term expression in a combined sensitive term expression input box.

The user may also import, from a file that includes a plurality of combined sensitive term expressions, a plurality of combined sensitive term expressions into the combined sensitive term expression input box in batches. The user may add one or more combined sensitive term expressions in the combined sensitive term expression input box to a combined sensitive term expression output box. The combined sensitive term expression in the combined sensitive term expression output box is a combined sensitive term expression that the manual configuration module 101 needs to obtain.

The user may alternatively delete one or more combined sensitive term expressions from the combined sensitive term expression output box or migrate one or more combined sensitive term expressions to the combined sensitive term expression output box.

The user may alternatively export a plurality of combined sensitive term expressions in the combined sensitive term expression input box in batches, to generate a file including the plurality of combined sensitive term expressions or provide the plurality of combined sensitive term expressions in the combined sensitive term expression input box for the manual configuration module 101. The user may alternatively search for a combined sensitive term expression in the combined sensitive term expression input box or the combined sensitive term expression output box.

Step 302: An expression parsing module 102 obtains the combined sensitive term expression from the manual configuration module 101, parses the combined sensitive term expression, and generates a corresponding user combined sensitive term entry. The expression parsing module 102 may add the obtained user combined sensitive term entry to the combined sensitive term library. The expression parsing module 102 may parse the combined sensitive term expression into one or more user combined sensitive term entries including a logical operator AND (&). Terms included in the user combined sensitive term entry may be arranged in alphabetical order.

For example, a combined sensitive term expression including OR (|) is parsed into one or more user combined sensitive term entries including AND (&). A combined sensitive term expression "(A|B)&C&D: c" may be parsed into two user combined sensitive term entries. The two user combined sensitive term entries are respectively "A&C&D: c" and "B&C&D: c".

For another example, a combined sensitive term expression including NOT (!) is parsed into one or more user combined sensitive term entries including AND (&). A combined sensitive term expression "A&B&C&!D: c" may be parsed into two user combined sensitive term entries. The two user combined sensitive term entries are respectively "A&B&C&D: None" and "A&B&C: c". If the category is None (None), it indicates that the combined sensitive term does not relate to any category. In other words, a text including "A&B&C&D" does not relate to sensitive content.

For another example, a combined sensitive term expression including a plurality of logical operators except AND is parsed into one or more user combined sensitive term entries including AND (&). A combined sensitive term expression "(A|B)&C&! D: c" may be parsed into four user combined sensitive term entries. The four user combined sensitive term entries are respectively "A&C&D: None", "B&C&D: None", "A&C: c", and "B&C: c".

Based on a combined sensitive term expression configured by the user, a quantity of combined sensitive term entries obtained by a detection apparatus 100 is small, and the omission easily occurs. To obtain more combined sensitive term entries, various possible combined sensitive terms may be covered. An automatic generation module 103 is disposed in the detection apparatus 100, and the automatic generation module 103 can automatically generate a combined sensitive term entry by using artificial intelligence.

Step 303: The automatic generation module 103 generates a candidate combined sensitive term entry. This embodiment of this application does not limit a specific manner in which the automatic generation module 103 performs step 303. Any manner in which a candidate combined sensitive term entry can be generated by using artificial intelligence is applicable to this embodiment of this application.

The following lists a manner in which the automatic generation module 103 generates the candidate combined sensitive term entry.

Step 1: The automatic generation module 103 obtains a training sample. The training sample includes one or more texts that carry an annotation, and a sensitive term and a category related to the sensitive term are annotated in the text. The category includes but is not limited to politics, porn, gambling, drug, and None. Step 2: The automatic generation module 103 recognizes a key sentence in the training sample, where the key sentence is a sentence that expresses illegal content in the text of the training sample. The automatic generation module 103 may recognize the key sentence by using a deep learning natural language processing (natural language processing, NLP) model. For example, the automatic generation module 103 recognizes from the training sample a key sentence "全球的正义力量共同联合制止 DEABC 学员 FG 暴行 (Justice forces from all over the world join together to stop DEABC students' FG atrocities)".

Step 3: The automatic generation module 103 performs term segmentation on the key sentence to obtain a term set of the key sentence, where the term set includes a term in the key sentence. The term segmentation is to decompose a sentence by term granularity. A manner in which the automatic generation module 103 performs term segmentation on the key sentence is not limited in this application. For example, the automatic generation module 103 may perform term segmentation on the key sentence by using a deep learning model. A term set obtained through term segmentation on the key sentence "全球的正义力量共同联合制止 DEABC 学员 FG 暴行 (Justice forces from all over the world join together to stop DEABC students' FG atrocities)" includes the following terms: 全球, 的, 正义, 力量, 共同, 联合, 制止, DE, ABC, 学员, FG, 暴行 (all over the world, from, justice, forces, join, together, stop, DE, ABC, student, FG, atrocities).

Step 4: The automatic generation module 103 filters the term set of the key sentence. The automatic generation module 103 determines value of each term in the term set. The value of the term represents semantics expressed by the term in the key sentence. Some prepositions or conjunctions usually only represent orientation or play a connection role, and do not have actual semantics, and such terms have low value. Some nouns or verbs have actual semantics, and such terms have high value. The automatic generation module 103 may evaluate each term in the term set by using a term frequency-inverse document frequency (term frequency-inverse document frequency, TFIDF) algorithm or a similar algorithm, to determine value of the term in the term set. The terms " 的 (from)" and " 共同 (together)" may be filtered out from the term set { 全球, 的, 正义, 力量, 共同, 联合, 制止, DE, ABC, 学员, FG, 暴行 (all over the world, from, justice, forces, join, together, stop, DE, ABC, student, FG, atrocities)}.

The automatic generation module 103 filters the term set of the key sentence based on the value of each term in the term set, for example, filters out a term with low value (for example, lower than a threshold) in the term set.

Step 5: The automatic generation module 103 generates the candidate combined sensitive term entry based on a filtered term set. The automatic generation module 103 sorts terms in the filtered term set in alphabetical order, and annotates, for the term, a category annotated on the training sample, to form a combined sensitive term entry. For example, a combined sensitive term entry " 暴行 &ABC&DE&FG& 全球 & 制止: 政 (atrocities & ABC & DE & FG & all over the word & stop: politics)" is generated based on the filtered term set { 全球, 正义, 力量, 联合, 制止, DE, ABC, 学员, FG, 暴行 (all over the word, justice, forces, join, stop, DE, ABC, student, FG, atrocities)}.

It should be noted that the automatic generation module 103 may immediately perform step 303 after obtaining any training sample, to ensure that the candidate combined sensitive term entry can be generated in time and effectively. A source of the training sample is not limited in this embodiment of this application. For example, the training sample may be an official document, or a text annotated by a dedicated person, or may be a reviewed matching result provided by a manual review module 108. The reviewed matching result may be provided for the automatic generation module 103 in a form of a text annotated with an incorrectly hit combined sensitive term entry (or annotated with the incorrectly hit combined sensitive term entry and a correctly hit combined sensitive term entry).

In this embodiment of this application, the automatic generation module 103 can write, into the combined sensitive term library, the candidate combined sensitive term entry generated by itself. For the automatic generation module 103, the automatic generation module 103 may generate the candidate combined sensitive term entry as long as the training sample is provided for the automatic generation module 103. The automatic generation module 103 can generate a large quantity of candidate combined sensitive term entries, and with the increase of provided training samples, the automatic generation module 103 can also generate more candidate combined sensitive term entries. In this way, the combined sensitive term entry included in the combined sensitive term library can be further enriched, and a large-scale combined sensitive term library is formed. Accuracy of matching a subsequent combined sensitive term can be improved by using the large-scale combined sensitive term library, and further, offensive content in a text can be accurately recognized.

Step 304: A filtering module 104 filters the combined sensitive term library. This step is an optional step.

For both the user combined sensitive term entry generated by the expression parsing module 102 or the candidate combined sensitive term entry generated by the automatic generation module 103, an incorrect combined sensitive term entry may exist. The incorrect combined sensitive term entry refers to a combined sensitive term entry whose actual category is inconsistent with an annotated category of the combined sensitive term entry or a combined sensitive term entry that does not need to be matched. For example, if a category of a combined sensitive term entry is gambling, that is, the combined sensitive term entry relates to gambling, but actually content expressed by the combined sensitive term entry does not relate to gambling, the combined sensitive term entry is an incorrect combined sensitive term entry. For another example, if a combined sensitive term entry appears in the combined sensitive term library, but content expressed by the combined sensitive term entry clearly does not relate to any sensitive content, and a combined sensitive term in the combined sensitive term entry can appear in a text, an annotation of the combined sensitive term entry is an incorrect combined sensitive term entry.

The filtering module 104 filters the combined sensitive term library in many manners, and three manners are listed below. The filtering module 104 may filter the combined sensitive term library by using one or more of the three manners.

Manner 1: The filtering module 104 filters the combined sensitive term library based on the incorrectly hit combined sensitive word entry provided by the manual review module 108.

The manual review module 108 can detect a review operation by the user, and obtain a reviewed combined sensitive term entry. The reviewed combined sensitive term entry may indicate whether there is correct hit or incorrect hit between the combined sensitive term entry and the text.

The filtering module 104 may use the incorrectly hit combined sensitive term entry as a target combined sensitive term entry, and remove the target combined sensitive term entry from the combined sensitive term library.

The filtering module 104 may also use an incorrectly hit combined sensitive term entry that meets a preset rule as a target combined sensitive term entry, and remove the target combined sensitive term entry from the combined sensitive term library. The preset rule restricts a quantity of times of hit on the combined sensitive term entry and a proportion or quantity of times of incorrect hit in the quantity of times of hit. For example, the preset rule may indicate that hit is more than three times and each time of the hit is incorrect hit. For another example, the preset rule may indicate that hit is more than 12 times, and a proportion of times of incorrect hit in a quantity of times of the hit is greater than 90%.

Manner 2: The filtering module 104 filters the combined sensitive term library based on a first matching result provided by the matching module 106 or a second matching result provided by an intelligent detection module 107. The following uses an example in which the filtering module 104 filters the combined sensitive term library based on the first matching result for description. The matching module 106 can obtain the first matching result. The first matching result indicates a hit combined sensitive term entry. However, if a combined sensitive term entry is hit for too many times, it indicates that the combined sensitive term entry appears frequently, and the combined sensitive term entry that appears frequently may be a common expression and may not necessarily relate to some sensitive content.

The matching module 106 may provide a historical first matching result for the filtering module 104, and the filtering module 104 may filter the combined sensitive term library based on the historical first matching result. For example, the filtering module 104 may use a combined sensitive term entry that meets a filtering condition in the historical first matching result as a target combined sensitive term entry, and remove the target combined sensitive term entry from the combined sensitive term library.

For example, the matching module 106 may use a combined sensitive term entry as a target combined sensitive term entry, where a quantity of times of hit on the combined sensitive term entry in the first matching result within one day exceeds a quantity threshold (for example, the quantity threshold is 500).

Manner 3: The filtering module 104 filters the combined sensitive term library based on a manually defined target combined sensitive term entry. For example, an operation and maintenance personnel may artificially define a target combined sensitive term entry based on experience of the operation and maintenance personnel, and provide the target combined sensitive term entry for the filtering module 104. After obtaining the target combined sensitive term entry, the filtering module 104 may remove the target combined sensitive term entry from the combined sensitive term library. Step 305: The text obtaining module 105 obtains a to-be-detected text, and sends the to-be-detected text to the matching module 106.

In different scenarios, the text obtaining module 105 obtains the to-be-detected text in different manners. For example, in a scenario in which a cloud management platform monitors and analyzes service content posted by a cloud tenant, the text obtaining module 105 may collect a to-be-detected text from a resource leased by a cloud tenant in a cloud data center. For another example, in a scenario in which a regulator monitors and analyzes internet content, the text obtaining module 105 may obtain to-be-posted content submitted by a user through client software of an application.

The to-be-posted content is a to-be-detected text. For another example, in a scenario of monitoring and analyzing content posted in a local area network, the text obtaining module 105 collects information transmitted in the local area network, and the collected information is a to-be-detected text. For another example, in a scenario in which a service provider monitors and analyzes content of a service user, the text obtaining module 105 obtains a to-be-detected text based on a request from the service user.

Step 306: The matching module 106 performs, based on the combined sensitive term library, combined sensitive term matching on the to-be-detected text to obtain a first matching result. The first matching result indicates a combined sensitive term entry found in the to-be-detected text. The following describes a method in which the matching module 106 performs combined sensitive term matching on the to-be-detected text. In the method, the matching module 106 may perform the following steps.

Step 1: The matching module 106 constructs two Trie trees by using the combined sensitive term entry in the combined sensitive term library. For ease of description, the two Trie trees are respectively a negative instance Trie tree and a positive instance Trie tree. The negative instance Trie tree is constructed based on a combined sensitive term entry whose category is None in the combined sensitive term library. Leaf nodes of the negative instance Trie tree are None. The positive instance Trie tree is constructed based on a combined sensitive term entry whose category is not None in the combined sensitive term library, for example, a combined sensitive term entry whose category is politics, porn, gambling, drug, or any customized category. Leaf nodes of the positive instance Trie tree are not None.

For example, there are four combined sensitive term entries in the combined sensitive term library, and the four combined sensitive term entries are respectively "暴行&A&B&C&全球&制止: 政 (atrocities &A&B&C& all over the word & stop: politics)", "A 学员&C&D: 政 (A student &C&D: politics)", "A&B&谣言: None (A&B& rumor: None)", and

"A&BC& 弥天大谎: None (A&BC& enormous lie: None)".

All combined sensitive term entries whose category is None are added to the negative instance Trie after being sorted in alphabetical order. The leaf nodes of the negative instance Trie tree are None. FIG. 5A is a diagram of a negative instance Trie tree.

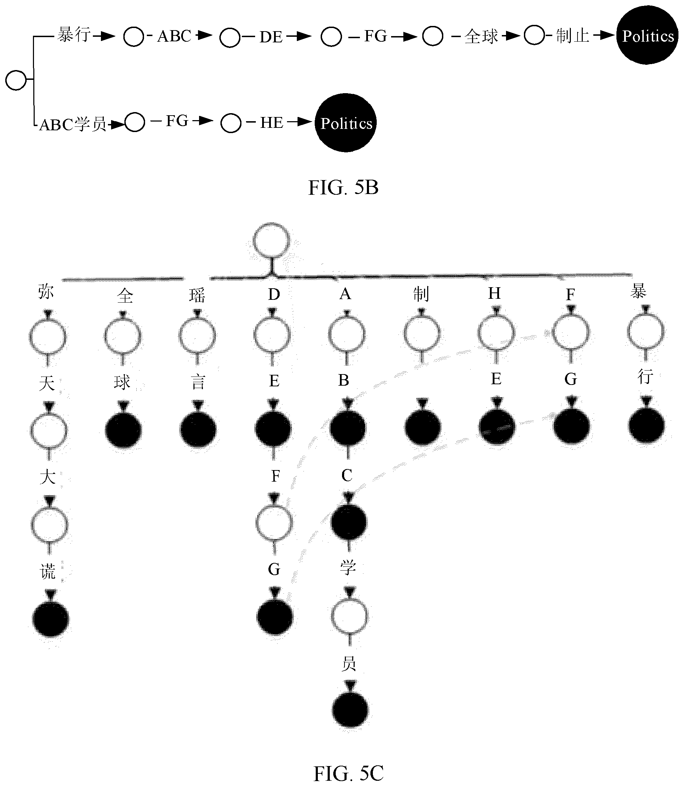

All combined sensitive term entries whose category is politics, porn, gambling, drug, or any customized category are added to the positive instance Trie after being sorted in alphabetical order. The leaf nodes of the positive instance Trie tree are not None. FIG. 5B is a diagram of a positive instance Trie tree.

Step 2: The matching module 106 invokes an AC automaton to obtain a candidate term sequence based on the to-be-detected text. The candidate term sequence includes one or more terms in the to-be-detected text. The terms may be referred to as candidate terms.

The matching module 106 may perform preprocessing on the to-be-detected text. The preprocessing includes but is not limited to operations such as decompression, label removal, conversion from traditional Chinese to simplified Chinese, removal of a special symbol, segmentation, and sentence segmentation. The matching module 106 invokes the AC automaton to perform matching on a preprocessed text to obtain the candidate term sequence. When invoking the AC automaton to obtain the candidate term sequence, the matching module 106 may construct a Trie tree required by the AC automaton. Nodes in the Trie tree cover terms of all combined sensitive term entries in the combined sensitive term library. Different from the positive instance Trie tree and the negative instance Trie tree, the Trie tree is not limited by term combination in a combined sensitive term entry, and term combination of all the combined sensitive term entries in the combined sensitive term library is dispersed and presented in the Trie tree.

An example in which four combined sensitive term entries in the combined sensitive term library, and the four combined sensitive term entries are respectively "暴行&A&B&C& 全球&制止: 政 (atrocities &A&B&C& all over the word & stop: politics)", "A 学员&C&D: 政 (A student &C&D: politics)", "A&B& 谣言: None (A&B& rumor: None)", and "A&BC& 弥天大谎: None (A&BC& enormous lie: None)" is still used. FIG. 5C is a diagram of a structure of a Trie tree required by an AC automaton. It can be learned from the figure that the Trie tree required by the AC automaton is to divide terms in a combined sensitive term entry into single characters, and each node represents a character.

For example, a to-be-detected text is " 所谓 DEFG 是 ABC 撒下的一个弥天大谎 (The DEFG is an enormous lie told by ABC)", and the matching module 106 invokes the AC automaton to obtain a plurality of candidate terms. The plurality of candidate terms are respectively ABC, DE, DEFG, and 弥天大谎 (enormous lie).

Step 3: The matching module 106 performs matching on the candidate term sequence based on the negative instance Trie tree and the positive instance Trie tree. For example, the matching module 106 may perform, separately in the negative instance Trie tree and the positive instance Trie tree, matching on the candidate terms included in the candidate term sequence, and determine a combined sensitive term entry matching the negative instance Trie tree and the positive instance Trie tree. The combined sensitive term entry includes a part or all of the candidate terms in the candidate term sequence.

If the candidate term sequence is hit in the negative instance Trie tree, it indicates that the to-be-detected text has no combined sensitive term and no sensitive content.

If the candidate term sequence is hit in the positive instance Trie tree, it indicates that the to-be-detected text has a combined sensitive term and sensitive content.

If the candidate term sequence is not hit in both the negative instance Trie tree and the positive instance Trie tree, it indicates that the to-be-detected text has no combined sensitive term and no sensitive content.

Step 307: The intelligent detection module 107 detects the to-be-detected text to obtain a second matching result. This step is an optional step.

To obtain a more accurate first matching result, the detection apparatus 100 may further deploy the intelligent detection module 107. The intelligent detection module 107 can also detect the to-be-detected text to obtain the second matching result. The second matching result indicates a hit combined sensitive term entry. That is, step 308 is performed. A detection manner used by the intelligent detection module 107 is different from a matching manner used by the matching module 106.

The intelligent detection module 107 can invoke an AI detection model, use the to-be-detected text as an input of the AI detection module, and input the to-be-detected text into the AI detection model. The AI detection module is generated through pre-training, and can detect the input text to determine a combined sensitive term entry matching the text.

Step 308: The manual review module 108 obtains a matching result generated by the matching module 106. The matching result may be the first matching result, or may be a matching result obtained by summarizing the first matching result and the second matching result. For example, the first matching result and the second matching result may be summarized, and a repeated combined sensitive term entry is deleted to obtain the matching result.

Step 309: The manual review module 108 presents the matching result. The manual review module 108 may present to the user the to-be-detected text and a hit combined sensitive term entry indicated in the matching result.

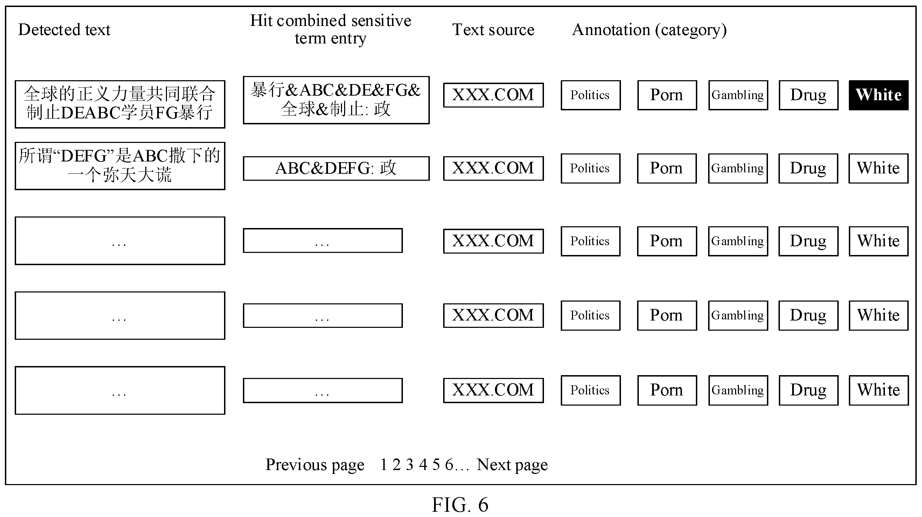

FIG. 6 is a diagram of an interface of presenting the matching result by the manual review module 108 according to an embodiment of this application. In the diagram of the interface, a to-be-detected text and a hit combined sensitive term entry may be presented to the user. The to-be-detected text may include a plurality of sentences formed through segmentation by using punctuations (for example, a comma, a period, a colon, and a semicolon). Therefore, when the to-be-detected text is presented, the plurality of sentences may be presented in sequence. For a sentence that hits a combined sensitive term entry, matching of the hit combined sensitive term entry is presented on one side of the sentence. Optionally, a category of the hit combined sensitive term entry and a source of the text may be also presented. For a sentence that does not hit a combined sensitive term entry, matching of the hit combined sensitive term entry is not presented on one side of the sentence.

Step 310: The manual review module 108 determines an incorrectly hit combined sensitive term entry and a correctly hit combined sensitive term entry based on a review operation by the user. On an interface of the matching result, the user may view a hit combined sensitive term entry and determine whether the hit combined sensitive term entry is an incorrectly hit combined sensitive term entry or a correctly hit combined sensitive term entry.

In the diagram of the interface shown in FIG. 6, an annotation option is provided. The user may annotate the incorrectly hit combined sensitive term entry as a white entry, and in the diagram of the interface shown in FIG. 6, "white" is used to represent the white entry. An entry that with a white entry is an incorrectly hit combined sensitive term entry.

Step 311: The manual review module 108 feeds back the incorrectly hit combined sensitive term entry to the filtering module 104, so that the filtering module 104 filters the combined sensitive term entry by using the incorrectly hit combined sensitive term entry.

The manual review module 108 feeds back a reviewed matching result to the automatic generation module 103. The reviewed matching result includes the incorrectly hit combined sensitive term entry and the correctly hit combined sensitive term entry annotated by the user, so that the automatic generation module 103 uses the reviewed matching result as a training sample to automatically generate a combined sensitive term entry.

In this embodiment of this application, the automatic generation module 103 can recognize a key sentence by using an AI technology (for example, an NLP model), and then generate a candidate sensitive term entry. When recognizing the key sentence, the automatic generation module 103 may invoke the NLP model. The AI recognition model is pre-trained and is configured to recognize a key sentence.

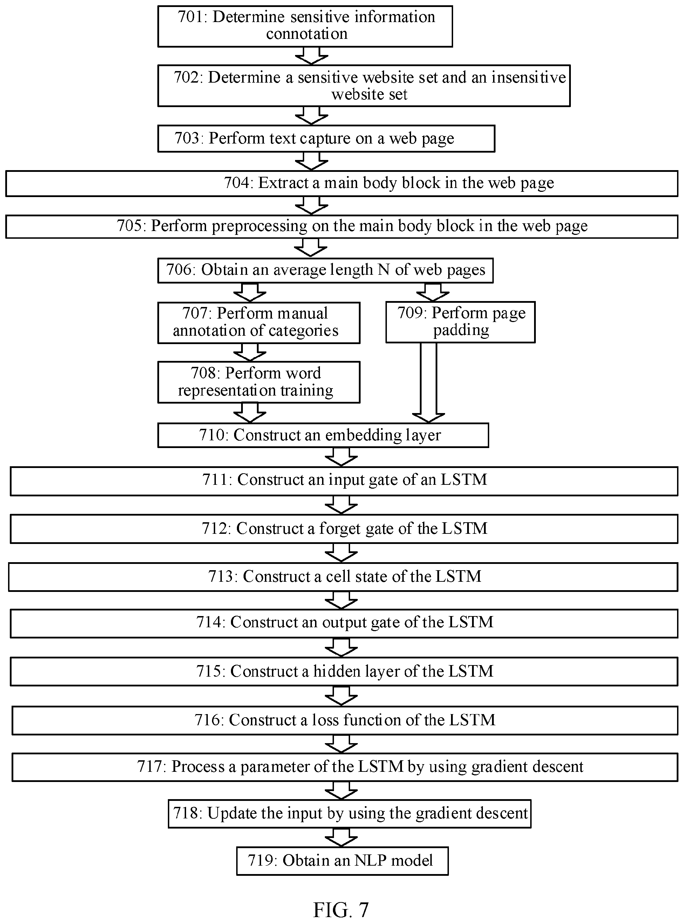

The following describes a training process of the NLP model with reference to FIG. 7.

Step 701: Determine sensitive information connotation. To be specific, meaning expressed by sensitive information is determined.

Step 702: Determine a sensitive website set and an insensitive website set based on the sensitive information connotation in step 701.

Step 703: Use a web crawler to perform text capture on a web page on a website in the sensitive website set and the insensitive website set in step 702.

Step 704: Analyze the web page in step 703 based on a DOM tree, and extract a main body block in the web page, where the main body block is a text block.

Step 705: Perform preprocessing on all main body block sets mentioned in step 704, where the preprocessing includes but is not limited to operations such as label removal, removal of an invalid uniform resource locator (uniform resource locator, URL), conversion between full-width and half-width, conversion between traditional Chinese and simplified Chinese, removal of a special character, and Chinese term segmentation. Each web page obtained through the preprocessing corresponds to a list of tokens (tokens) (where the token may identify words or punctuations in the web page). It is assumed that an $i^{th}$ web page includes n tokens, which are denoted as $p^{(i)} = \left( t_1^{(i)}, t_2^{(i)}, ..., t_n^{(i)} \right)$.

Step 706: Collect statistics on lengths of all web pages in step 705 to obtain an average length N of all the web pages.

Step 707: Perform manual annotation on the web pages in step 705 one by one, where an annotation label (label) set is: political, terroristic, pornographic, sensitive public opinion, and normal, five categories in total, denoted as labels = {politics, terroristic, pornographic, sensitive public opinion, normal}.

Step 708: Use a word2vec (word to vector) model to perform word representation training on the text set obtained in step 705. First, token lists of all the web pages in step 705 are combined to obtain a token set, and a random vector is initialized for each token to be used as an initial word vector of the token. Then, a skip-gram (skip-gram) model or a continuous bag-of-words (continuous bag-of-words, CBOW) model is used to train the token lists in step 705 one by one, so that a word vector corresponding to a token is trained, and a word vector corresponding to a token t is denoted as $v_t$.

Step 709: Perform padding on the token list obtained in step 705. A padded length is $\alpha N$, and $\alpha$ is a user-defined rate. A truncation operation is performed on a web page whose length is greater than $\alpha N$. A padding operation is performed on a web page whose length is less than $\alpha N$. No operation is performed on a web page whose length is equal to $\alpha N$. Each web page is represented as

$$page^{(i)} = \left(c_1^{(i)}, c_2^{(i)}, \ldots, c_{\alpha N}^{(i)}\right).$$

Step 710: Construct an embedding layer, and convert a web page set in step 709 by using word representation obtained through the training in step 708. After the conversion, each web page is represented as

$$page^{(i)} = \left(v_{c_1^{(i)}}, v_{c_2^{(i)}}, \ldots, v_{c_{\alpha N}^{(i)}}\right),$$ abbreviated as $$page^{(i)} = \left(x_1^{(i)}, x_2^{(i)}, \ldots, x_{\alpha N}^{(i)}\right).$$

Step 711: Construct an input gate $it = \sigma(W_i * [h_{t-1}, x_t] + b_i)$ of a long short-term memory network (long short-term memory network, LSTM) by using $p^{(i)}$ in step 710 as an input. $W_i$ is a weight matrix, $h_{t-1}$ is a hidden layer corresponding to a previous token, $b_i$ is an offset unit, and $\sigma(\cdot)$ is a sigmoid function.

Step 712: Construct a forget gate $f_t = \sigma(W_f * [h_{t-1}, x_t] + b_f)$ of the LSTM.

Step 713: Construct a cell state (cell state) of the LSTM based on it and $f_t$ obtained in step 711 and step 712: by using the following formula $\tilde{C}_t = \tanh(W_c * [h_{t-1}, x_t] + b_c)$, and $C_t = f_t * C_{t-1} + i_t * \tilde{C}_t$.

Step 714: Construct an output gate $o_t = \sigma(W_o * [h_{t-1}, x_t] + b_o)$.

Step 715: Construct a hidden layer $h_t = o_t * \tanh(C_t)$ by using $C_t$ in step 713 and $o_t$ in step 714.

Step 716: Construct a loss function of a classifier by using a label category in step 707 and the hidden layer in step 715, and use a cross entropy as the loss function, denoted as $J =$

$$-\left(\sum_{j \in \text{labels}} 1\{y = j\} \log \frac{\exp(W_j h_{\alpha N} + b)}{\sum_{k \in \text{labels}} \exp(W h_{\alpha N} + b)}\right) + \frac{\lambda}{2} \|W\|^2.$$

Step 717: Perform gradient descent on each parameter in step 710 to step 715 by using the loss function in step 716, where $$\theta := \theta - \beta \frac{\partial J}{\partial \theta},$$ and $\beta$ is a learning rate.

Step 718: Update the input by using the gradient descent, to learn a word vector, where $v_t := v_t - \beta \frac{\partial J}{\partial v_t}$.

Step 719: Repeat steps 716 to 718 until all data is trained, to obtain the NLP model.

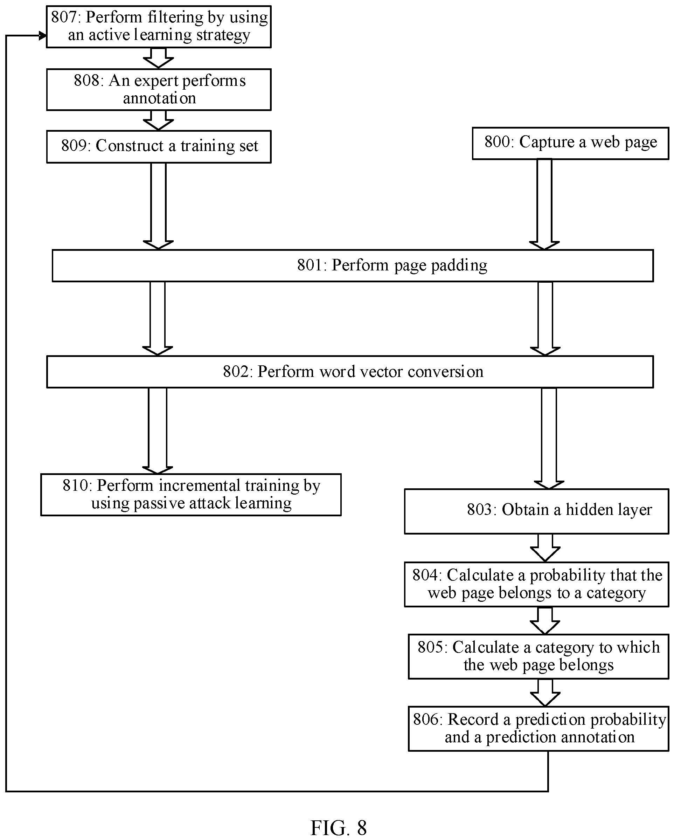

The following describes, with reference to FIG. 8, a training process of the AI detection model invoked by the intelligent detection module 107.

Step 800: Capture, by using a crawler technology, an online to-be-detected web page $p^{(u)}$, and perform preprocessing on $p^{(u)}$ in the manner of step 704 and step 705 to obtain $page^{(u)} = \left(t_1^{(u)}, t_2^{(u)}, \ldots, t_n^{(u)}\right).$

Step 801: Perform padding on $p^{(u)}$ in step 800 with $\alpha N$ to obtain $$p^{(u)} = \left(t_1^{(u)}, t_2^{(u)}, \ldots, t_{\alpha N}^{(u)}\right).$$

Step 802: Perform word vector conversion on the input in step 801 in the manner of step 710, where

$$page^{(u)} = \left(x_1^{(u)}, x_2^{(u)}, \ldots, x_{\alpha N}^{(u)}\right).$$

Step 803: Calculate, based on the manner of steps 711 to 715 and a parameter obtained in step 719, a hidden layer of a neural network by using $p^{(u)}$ in step 802 as an input, to obtain $h_{\alpha N}^{(u)}$.

Step 804: Calculate a probability that the to-be-detected web page belongs to each category in the labels

$$\text{p}^{(u)} = \frac{1}{\sum_{k \in labels} \exp\left(W_k h_{\alpha N}^{(u)} + b_k\right)} \begin{bmatrix} \exp\left(W_{\text{political}} h_{\alpha N}^{(u)} + b_{\text{political}}\right) \\ \exp\left(W_{\text{terroristic}} h_{\alpha N}^{(u)} + b_{\text{terroristic}}\right) \\ \exp\left(W_{\text{pornographic}} h_{\alpha N}^{(u)} + b_{\text{pornographic}}\right) \\ \exp\left(W_{\text{sensitive public opinion}} h_{\alpha N}^{(u)} + b_{\text{sensitive public opinion}}\right) \\ \exp\left(W_{\text{normal}} h_{\alpha N}^{(u)} + b_{\text{normal}}\right) \end{bmatrix}.$$

Step 805: Calculate a category $y^{(u)} = \arg \max \text{p}^{(u)}$ to which $p^{(u)}$ belongs.

Step 806: Record the prediction probability $p^{(u)}$ in step 804 and a prediction annotation $y^{(u)}$ in step 805.

Step 807: Use an active learning strategy to filter results in step 806, and use a breaking ties (Breaking Ties) strategy to select a sample with y$^{(u)}$ being an abnormal label and with a posteriori probabilities p$^{(u)}$ having a minimum

$$\text{BT}(p^{(u)}) = \max_{k \in labels} \left( P\left(y = k \mid h_{\alpha N}^{(u)}\right)\right) - \max_{k \in labels \setminus k^+} \left( P\left(y = k \mid h_{\alpha N}^{(u)}\right)\right)$$

difference. , where

$$k^+ = \max_{k \in labels} \left( P\left(y = k \mid h_{\alpha N}^{(u)}\right)\right)$$

. If y$^{(u)}$ ∈ {political, terroristic, pornographic, sensitive public opinion}, and BT(p$^{(u)}$) is less than a preset threshold, for example, 0.1, an operation of step 808 is performed on the sample.

Step 808: An expert performs manual annotation on the sample that meets a condition in step 807, and step 809 is performed.

Step 809: Collect web pages annotated by the expert in step 808. When a quantity of the web pages reaches a specific value, preprocessing (step 801 and step 802) is performed on the web pages, a training set is constructed, and the training set is input into the neural network. For a manner, refer to step 711 to step 717.

Step 810: Perform incremental training on the neural network by using passive attack learning, and

$$\hat{\theta} = \arg\min_{\theta} \left[ J + \frac{\lambda}{2} \|\theta - \tilde{\theta}\|^2 \right]$$

, where $\theta$ represents all parameters of the neural network, J represents a cross entropy loss function (same as that in step 716), $\lambda$ represents a weighting factor, and $\tilde{\theta}$ represents a current neural network parameter.

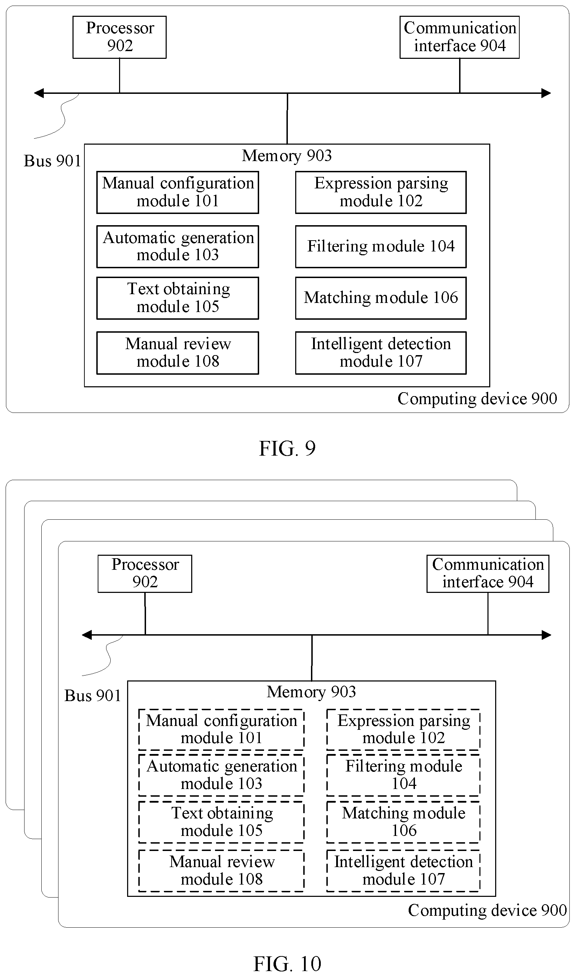

This application further provides a computing device 900. As shown in FIG. 9, the computing device 900 includes a bus 901, a processor 902, a memory 903, and a communication interface 904. The processor 902, the memory 903, and the communication interface 904 communicate with each other via the bus 901. The computing device 900 may be a server or a terminal device. It should be understood that quantities of processors and memories in the computing device 900 are not limited in this application.

The bus 901 may be a peripheral component interconnect (peripheral component interconnect, PCI) bus, an extended industry standard architecture (extended industry standard architecture, EISA) bus, or the like. The bus may include an address bus, a data bus, a control bus, and the like. For ease of representation, only one line is for representing the bus in FIG. 9, but this does not mean that there is only one bus or only one type of bus. The bus 901 may include a channel for transferring information between various components (for example, the memory 903, the processor 902, and the communication interface 904) of the computing device 900.

The processor 902 may include any one or more of processors such as a central processing unit (central processing unit, CPU), a graphics processing unit (graphics processing unit, GPU), a microprocessor (microprocessor, MP), or a digital signal processor (digital signal processor, DSP). The memory 903 may include a volatile memory (volatile memory), for example, a random access memory (random access memory, RAM). The processor 902 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 903 stores executable program code, and the processor 902 executes the executable program code to implement functions of the foregoing manual configuration module 101, expression parsing module 102, automatic generation module 103, text obtaining module 105, matching module 106, filtering module 104, manual review module 108, and intelligent detection module 107, to implement a combined sensitive term detection method. In other words, the memory 903 stores instructions used for performing the combined sensitive term detection method. The communication interface 904 uses a transceiver module, for example, but not limited to, a network interface card and a transceiver, to implement communication between the computing device 900 and another device or a communication network.

An embodiment of this application further provides a computing device cluster. The computing device cluster includes at least one computing device. The computing device may be a server, such as a central server, an edge server, or a local server in a local data center. In some embodiments, the computing device may alternatively be a terminal device, such as a desktop computer, a notebook computer, or a smartphone.

As shown in FIG. 10, the computing device cluster includes at least one computing device 900. The memory 903 in one or more computing devices 900 in the computing device cluster may store same instructions used for performing the combined sensitive term detection method.

In some possible implementations, the memory 903 of the one or more computing devices 900 in the computing device cluster may also separately store some instructions used for performing the combined sensitive term detection method. In other words, a combination of one or more computing devices 900 may jointly execute instructions for performing the combined sensitive term detection method.

It should be noted that memories 903 of different computing devices 900 in the computing device cluster may store different instructions respectively used for performing some functions of a detection apparatus. To be specific, the instructions stored in the memories 903 in different computing devices 900 may implement functions of one or more of the manual configuration module 101, the expression parsing module 102, the automatic generation module 103, the text obtaining module 105, the matching module 106, the filtering module 104, the manual review module 108, and the intelligent detection module 107.

An embodiment of this application further provides a computer program product including instructions. The computer program product may be software or a program product that includes instructions and that can run on a computing device or be stored in any usable medium. When the computer program product runs on at least one computing device, the at least one computing device is enabled to perform a combined sensitive term detection method.

An embodiment of this application further provides a computer-readable storage medium. The computer-readable storage medium may be any usable medium that can be stored by a computing device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a computing device to perform a combined sensitive term detection method.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of the present invention.

**Claims**

1. A combined sensitive term detection method, wherein the method comprises:

   obtaining a combined sensitive term expression provided by a user, wherein the combined sensitive term expression comprises a logical operator and a plurality of terms;
   generating a combined sensitive term library, wherein the combined sensitive term library comprises a plurality of combined sensitive term entries, and the plurality of combined sensitive term entries comprise a preset candidate combined sensitive term entry and a user combined sensitive term entry generated by parsing the combined sensitive term expression;
   detecting, based on the combined sensitive term library, a collected to-be-detected text to obtain a first matching result, wherein the first matching result indicates a hit combined sensitive term entry of the to-be-detected text in the combined sensitive term library; and
   presenting the first matching result to the user.

2. The method according to claim 1, wherein the candidate combined sensitive term entry is extracted from a pre-configured training sample by using an artificial intelligence (AI) technology.

3. The method according to claim 1 or 2, wherein after the presenting the first matching result to the user, the method further comprises:

   detecting a review operation performed by the user on the first matching result, and determining an incorrectly hit combined sensitive term entry annotated by the user; and
   filtering the combined sensitive term library based on the incorrectly hit combined sensitive term entry.

4. The method according to any one of claims 1 to 3, wherein the method further comprises:

   invoking an AI detection model to detect the to-be-detected text to obtain a second matching result, wherein the second matching result indicates a hit combined sensitive term entry of the to-be-detected text in the combined sensitive term library, and the AI detection model is a pre-trained model configured to detect a combined sensitive term entry existing in a text; and
   presenting the second matching result to the user.

5. The method according to any one of claims 1 to 4, wherein the detecting, based on the combined sensitive term library, a collected to-be-detected text comprises:

constructing a dictionary tree based on the plurality of combined sensitive term entries in the combined sensitive term library;

invoking an AC automaton to obtain a candidate term sequence in the to-be-detected text, wherein the candidate term sequence comprises one or more terms in the to-be-detected text; and

performing matching on the candidate term sequence in the dictionary tree, and determining a combined sensitive term entry matching a part or all of terms in the candidate term sequence, wherein the combined sensitive term entry matching the part or all of terms in the candidate term sequence is the hit combined sensitive term entry.

6. The method according to any one of claims 1 to 5, wherein the combined sensitive term expression comprises one or more of the following logical operators: AND, OR, NOT, and an operator representing preferential calculation.

7. A detection apparatus, wherein the apparatus comprises:

a manual configuration module, configured to obtain a combined sensitive term expression provided by a user, wherein the combined sensitive term expression comprises a logical operator and a plurality of terms;

an expression parsing module, configured to generate a combined sensitive term library, wherein the combined sensitive term library comprises a plurality of combined sensitive term entries, and the plurality of combined sensitive term entries comprise a preset candidate combined sensitive term entry and a user combined sensitive term entry generated by parsing the combined sensitive term expression;

a matching module, configured to detect, based on the combined sensitive term library, a collected to-be-detected text to obtain a first matching result, wherein the first matching result indicates a hit combined sensitive term entry of the to-be-detected text in the combined sensitive term library; and

a manual review module, configured to present the first matching result to the user.

8. The apparatus according to claim 7, wherein the apparatus further comprises an automatic generation module, wherein

the automatic generation module is configured to extract the candidate combined sensitive term entry from a pre-configured training sample by using an artificial intelligence (AI) technology.

9. The apparatus according to claim 7 or 8, wherein

the manual review module is further configured to detect a review operation performed by the user on the first matching result, and determine an incorrectly hit combined sensitive term entry annotated by the user; and

the apparatus further comprises a filtering module, wherein

the filtering module is further configured to filter the combined sensitive term library based on the incorrectly hit combined sensitive term entry.

10. The apparatus according to any one of claims 7 to 9, wherein the apparatus further comprises an intelligent detection module, wherein

the intelligent detection module is configured to invoke an AI detection model to detect the to-be-detected text to obtain a second matching result, wherein the second matching result indicates a hit combined sensitive term entry of the to-be-detected text in the combined sensitive term library, and the AI detection model is a pre-trained model configured to detect a combined sensitive term entry existing in a text; and

the manual review module is further configured to present the second matching result to the user.

11. The apparatus according to any one of claims 7 to 10, wherein the matching module is configured to:

construct a dictionary tree based on the plurality of combined sensitive term entries in the combined sensitive term library;

invoke an AC automaton to obtain a candidate term sequence in the to-be-detected text, wherein the candidate term sequence comprises one or more terms in the to-be-detected text; and

perform matching on the candidate term sequence in the dictionary tree, and determine a combined sensitive term entry matching a part or all of terms in the candidate term sequence, wherein the combined sensitive term entry matching the part or all of terms in the candidate term sequence is the hit combined sensitive term entry.

12. The apparatus according to any one of claims 7 to 11, wherein the combined sensitive term expression comprises one or more of the following logical operators: AND, OR, NOT, and an operator representing preferential calculation.

13. A computing device cluster, comprising at least one computing device, wherein each computing device comprises a processor and a memory; and
the processor of the at least one computing device is configured to execute instructions stored in the memory of the at least one computing device, to enable the computing device cluster to perform the method according to any one of claims 1 to 6.

14. A computer program product comprising instructions, wherein when the instructions are run by a computing device cluster, the computing device cluster is enabled to perform the method according to any one of claims 1 to 6.

15. A computer-readable storage medium, comprising computer program instructions, wherein when the computer program instructions are executed by a computing device cluster, the computing device cluster performs the method according to any one of claims 1 to 6.

| Text post apparatus 200 | Detection apparatus 100 |
|---|---|

FIG. 1

Detection apparatus 100

| Manual configuration module 101 | Expression parsing module 102 |
|---|---|
| Automatic generation module 103 | Filtering module 104 |
| Text obtaining module 105 | Matching module 106 |
| Manual review module 108 | Intelligent detection module 107 |

FIG. 2

EP 4 521 294 A1

301: Obtain a combined sensitive term expression

Manual configuration module 101

Combined sensitive term expression

Expression parsing module 102

302: Parse

Combined sensitive term entry
Combined sensitive term entry
...
Combined sensitive term entry

**Combined sensitive term library**
Combined sensitive term entry
Combined sensitive term entry
Combined sensitive term entry
Combined sensitive term entry
...
Combined sensitive term entry

Combined sensitive term entry
Combined sensitive term entry
...
Combined sensitive term entry

303: Generation by using AI

Automatic generation module 103

Training sample

311: Feed back

311: Feed back

304: Filter

Filtering module 104

Incorrectly hit combined sensitive term entry

Correctly hit combined sensitive term entry

Reviewed matching result

**Combined sensitive term library**

Combined sensitive term entry
Combined sensitive term entry
...
Combined sensitive term entry

306: Match

First matching result

310: Determine

Manual review module 108

309: Present

305: Obtain a to-be-detected text

Text obtaining module 105

To-be-detected text

To-be-detected text

Matching module 106

308: Obtain

Intelligent detection module 107

307: Detect

Second matching result

Matching result

FIG. 3

| Batch input | Empty | | | | Search |
|---|---|---|---|---|---|
| | | | | | Clear search |
| (A&器官)!(A&器官&谣言):政 | | | | | Batch output |

Add>>

Delete<<

A&器官:政
黑龙江&B&学员:政
黑龙江&C&恶行:政
黑龙江&呼吁&D:政
...
...
...
...
...
...
...
...
...
...
...
...
...
...

FIG. 4

DE ——▸ 〇 —— 谣言 ——▸ None (none)

〇 —— ABC ——▸ 〇

DEF ——▸ 〇 — 弥天大谎 ——▸ None (none)

FIG. 5A

FIG. 5B

FIG. 5C

| Detected text | Hit combined sensitive term entry | Text source | Annotation (category) | | | | |
|---|---|---|---|---|---|---|---|
| 全球的正义力量共同联合制止DEABC学员FG暴行 | 暴行&ABC&DE&FG&全球&制止: 政 | XXX.COM | Politics | Porn | Gambling | Drug | **White** |
| 所谓"DEFG"是ABC撒下的一个弥天大谎 | ABC&DEFG: 政 | XXX.COM | Politics | Porn | Gambling | Drug | White |
| ... | ... | XXX.COM | Politics | Porn | Gambling | Drug | White |
| ... | ... | XXX.COM | Politics | Porn | Gambling | Drug | White |
| ... | ... | XXX.COM | Politics | Porn | Gambling | Drug | White |

Previous page    1 2 3 4 5 6... Next page

FIG. 6

EP 4 521 294 A1

701: Determine sensitive information connotation

702: Determine a sensitive website set and an insensitive website set

703: Perform text capture on a web page

704: Extract a main body block in the web page

705: Perform preprocessing on the main body block in the web page

706: Obtain an average length N of web pages

707: Perform manual annotation of categories

709: Perform page padding

708: Perform word representation training

710: Construct an embedding layer

711: Construct an input gate of an LSTM

712: Construct a forget gate of the LSTM

713: Construct a cell state of the LSTM

714: Construct an output gate of the LSTM

715: Construct a hidden layer of the LSTM

716: Construct a loss function of the LSTM

717: Process a parameter of the LSTM by using gradient descent

718: Update the input by using the gradient descent

719: Obtain an NLP model

FIG. 7

807: Perform filtering by using an active learning strategy

808: An expert performs annotation

809: Construct a training set

800: Capture a web page

801: Perform page padding

802: Perform word vector conversion

810: Perform incremental training by using passive attack learning

803: Obtain a hidden layer

804: Calculate a probability that the web page belongs to a category

805: Calculate a category to which the web page belongs

806: Record a prediction probability and a prediction annotation

FIG. 8

FIG. 9

FIG. 10

## INTERNATIONAL SEARCH REPORT

| International application No. |
|---|
| **PCT/CN2023/081269** |

| A. | CLASSIFICATION OF SUBJECT MATTER |
|---|---|

G06F 40/284(2020.01)i

According to International Patent Classification (IPC) or to both national classification and IPC

| B. | FIELDS SEARCHED |
|---|---|

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 敏感, 检测, 词, 词语, 算符, 表达式, 词库, 建立, 生成, sensitive, detected, word, operator, expression, lexicon, build, generate

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 113705225 A (BEIJING FOUNDER ELECTRONICS CO., LTD.) 26 November 2021 (2021-11-26) description, paragraphs [0005]-[0045], and abstract | 1-15 |
| Y | CN 114676231 A (SANGFOR TECHNOLOGIES INC.) 28 June 2022 (2022-06-28) description, paragraphs [0081]-[0101], and abstract | 1-15 |
| A | CN 112016317 A (PING AN TECHNOLOGY (SHENZHEN) CO., LTD.) 01 December 2020 (2020-12-01) entire document | 1-15 |
| A | CN 113095076 A (PING AN BANK CO., LTD.) 09 July 2021 (2021-07-09) entire document | 1-15 |
| A | US 10878124 B1 (DATAGUISE, INC.) 29 December 2020 (2020-12-29) entire document | 1-15 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 May 2023** | **29 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/081269**

| Patent document cited in search report | | | Publication date (day/month/year) | Patent family member(s) | | | Publication date (day/month/year) |
|---|---|---|---|---|---|---|---|
| CN | 113705225 | A | 26 November 2021 | None | | | |
| CN | 114676231 | A | 28 June 2022 | None | | | |
| CN | 112016317 | A | 01 December 2020 | WO | 2021151333 | A1 | 05 August 2021 |
| CN | 113095076 | A | 09 July 2021 | None | | | |
| US | 10878124 | B1 | 29 December 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210813310X